# EUROPEAN PATENT APPLICATION

(11) **EP 3 671 638 A1**
(43) Date of publication of application: **24.06.2020**
(21) Application number: 19209502.4
(22) Date of filing: 15.11.2019
(51) Int. Cl.: G06T 7/55, G06T 19/20, H04N 13/111

(54) **IMAGE PROCESSING APPARATUS, IMAGE PROCESSING SYSTEM, IMAGE PROCESSING METHOD, AND COMPUTER PROGRAM**

(30) Priority: 19.12.2018 JP 2018237520
(71) Applicant: CANON KABUSHIKI KAISHA, Ohta-ku Tokyo 146-8501 (JP)
(72) Inventor: MARUYAMA, Kazuna, Tokyo, 146-8501 (JP)
(74) Representative: WESER & Kollegen Patentanwälte PartmbB

(57) **Abstract**

The technique of the present disclosure is capable of improving an object shape. An image processing apparatus (4) of the present disclosure: obtains a three-dimensional shape model of object generated based on a plurality of captured images obtained by a plurality of image capturing apparatuses; and corrects the obtained three-dimensional shape model based on a reference model.

## Description

### BACKGROUND OF THE INVENTION

### Field of the Invention

The technique of the present disclosure relates to a technique for generating a virtual viewpoint image from a plurality of images captured using a plurality of image capturing apparatuses in synchronization with each other.

### Description of the Related Art

In recent years, a technique has been drawing attention which involves installing a plurality of image capturing apparatuses at different positions, capturing images of a single object from a plurality of viewpoints in synchronization with each other, and using the plurality of images obtained by this image capturing to generate a virtual viewpoint image of the object as viewed from any desired virtual viewpoint. Japanese Patent Laid-Open No. 2008-015756 discloses a technique for generating such a virtual viewpoint image.

A virtual viewpoint image as above enables a viewer to view highlight scenes in, for example, a soccer game or a basketball game from various angles, and can therefore provide the viewer with a higher sense of presence than normal images captured by image capturing apparatuses.

Also, in addition to enhancing the sense of presence, this technique enables the viewer to check an object of interest such as a ball in a scene that affects the situation of the game or a judgment without other objects such as players blocking the object of interest. For example, by setting the virtual viewpoint at a position from which the ball and a line are both visible and do not get blocked by players, it is possible to provide the viewer with a virtual viewpoint image clearly capturing the moment of a questionable scene such as when it is difficult to judge whether the ball is inside or outside the line.

However, in a case where the object of interest is blocked by another object in the view of any of the installed image capturing apparatuses or other similar cases, a three-dimensional shape model of the object of interest generated based on the plurality of images may possibly be distorted in shape or lose a part of its contour. As a result, a virtual viewpoint image may possibly be generated with low reproduction accuracy.

In view of this, an object of the technique of the present disclosure is to improve the accuracy of an object shape.

### SUMMARY OF THE INVENTION

The present invention in its first aspect provides an image processing apparatus as specified in claims 1 to 12.

The present invention in its second aspect provides an image processing system as specified in claim 13.

The present invention in its third aspect provides an image processing method as specified in claim 14.

The present invention in its fourth aspect provides a computer program as specified in claim 15.

Further features of the present invention will become apparent from the following description of exemplary embodiments with reference to the attached drawings.

### BRIEF DESCRIPTION OF THE DRAWINGS

FIG. 1 is an entire configuration diagram of an image processing system in embodiment 1;
FIG. 2 is a hardware configuration diagram of an image processing apparatus;
FIG. 3A is a diagram showing an example of event information in embodiment 1;
FIG. 3B is a diagram showing an example of the event information in embodiment 1;
FIG. 4A is a diagram showing an example of reference model information in embodiment 1;
FIG. 4B is a diagram showing an example of the reference model information in embodiment 1;
FIG. 4C is a diagram showing an example of the reference model information in embodiment 1;
FIG. 5A is a diagram showing an example of 3D model information in embodiment 1;
FIG. 5B is a diagram showing an example of the 3D model information in embodiment 1;
FIG. 5C is a diagram showing an example of the 3D model information in embodiment 1;
FIG. 6A is a diagram showing an example screen on a user terminal in embodiment 1;
FIG. 6B is a diagram showing an example screen on the user terminal in embodiment 1;
FIG. 6C is a diagram showing an example screen on the user terminal in embodiment 1;
FIG. 7 is a flowchart of processing of fitting in embodiment 1;
FIG. 8 is a flowchart of processing of obtaining a target model in embodiment 1;
FIG. 9 is a flowchart of processing of obtaining a reference model in embodiment 1;
FIG. 10 is a flowchart of processing of correcting the target model in embodiment 1;
FIG. 11 is a flowchart of processing of rendering in embodiment 1;
FIG. 12 is a flowchart of processing of fitting in embodiment 2;
FIG. 13 is a flowchart of processing of checking the state of a target model in embodiment 2;
FIG. 14 is a flowchart of processing of rendering in embodiment 3; and
FIG. 15 is a diagram showing an example of overlap of compositions in embodiment 3.

### DESCRIPTION OF THE EMBODIMENTS

Embodiments of the technique of the present disclosure will be described below with reference to the drawings.

### (Embodiment 1)

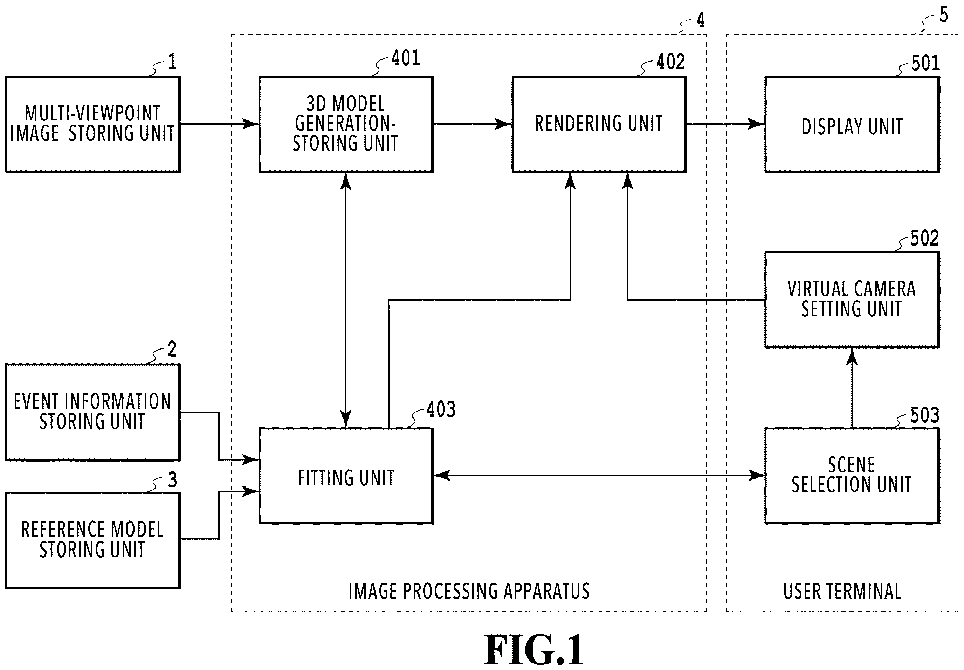

FIG. 1 is an entire configuration diagram of an image processing system according to embodiment 1 of the technique of the present disclosure.

The image processing system includes a multi-viewpoint image storing unit 1, an event information storing unit 2, a reference model storing unit 3, an image processing apparatus 4, and a user terminal 5. The image processing apparatus 4 includes a 3D model generation-storing unit 401, a rendering unit 402, and a fitting unit 403. The user terminal 5 has a display unit 501, a virtual camera setting unit 502, and a scene selection unit 503.

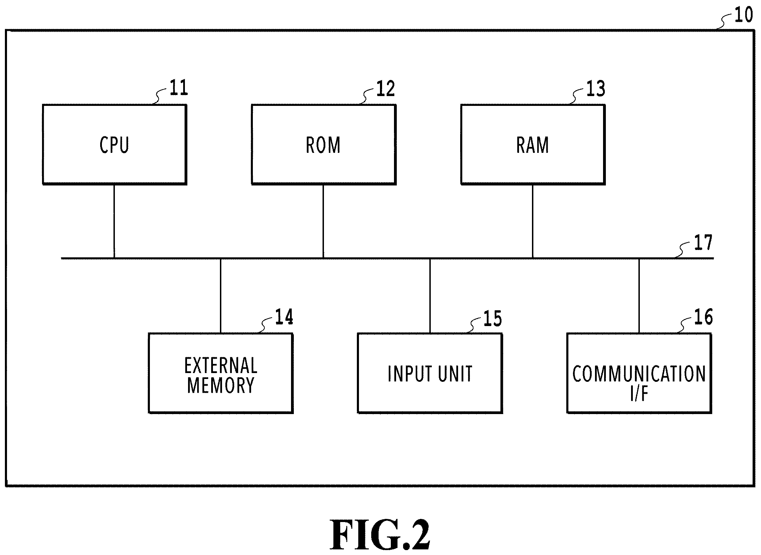

FIG. 2 is a diagram showing the hardware configuration of the image processing apparatus 4. The image processing apparatus 4 comprises a CPU 11, an ROM 12, an RAM 13, an external memory 14, an input unit 15, a communication I/F 16, and a system bus 17. The CPU 11 has overall control on operations in the image processing apparatus 4, and controls the above components (12 to 16) through the system bus 17. The ROM 12 is a non-volatile memory storing a program necessary for the CPU 11 to execute processing. Note that this program may be stored the external memory 14 or a detachable storage medium (not shown). The RAM 13 functions as a main memory and a work area for the CPU 11. In sum, in executing the processing, the CPU 11 loads the necessary program from the ROM 12 to the RAM 13 and executes the loaded program to thereby implement various functions and operations.

The external memory 14 stores various pieces of data and various pieces of information necessary for the CPU 11 to perform the processing using the program. Also, the external memory 14 may store various pieces of data and various pieces of information obtained as a result of the processing performed by the CPU 11 using the program, and/or include the multi-viewpoint image storing unit 1, the event information storing unit 2, and the reference model storing unit 3 shown in FIG. 1.

The input unit 15 is formed of a keyboard, operation buttons, and the like, and the user can enter parameters by operating the input unit 15. The communication I/F 16 is an interface for communicating with external apparatuses. The system bus 17 communicatively connects the CPU 11, the ROM 12, the RAM 13, the external memory 14, the input unit 15, and the communication I/F 16 to each other.

The CPU 11 is capable of implementing the functions of the units of the image processing apparatus 4 shown in FIG. 1 by executing the program. However, at least some of the units of the image processing apparatus 4 shown in FIG. 1 may operate as dedicated hardware. In this case, the dedicated hardware operates under control of the CPU 11.

Note that the image processing apparatus 4 may have one or more dedicated pieces of hardware or graphics processing units (GPUs) different from the CPU 11, and the GPUs or the dedicated pieces of hardware may perform at least part of the processing by the CPU 11. Examples of the dedicated pieces of hardware include an application-specific integrated circuit (ASIC), a digital signal processor (DSP), and so on.

Further, the user terminal 5 may also have a hardware configuration as shown in FIG. 2, and its input unit 15 may have an image display function.

Referring back to FIG. 1, the functions of the components of the image processing system will be described.

The multi-viewpoint image storing unit 1 stores a multi-viewpoint image having a plurality of images captured in synchronization with each other by a plurality of cameras (image capturing apparatuses) installed so as to surround an image capturing region such as a sports field.

The event information storing unit 2 stores event information on the multi-viewpoint image held in the multi-viewpoint image storing unit 1. Here, the event information contains at least basic event information such as the name of an event and the date and location when and where the event is held, and event log information in which actions that occurred in the event are recorded in time series.

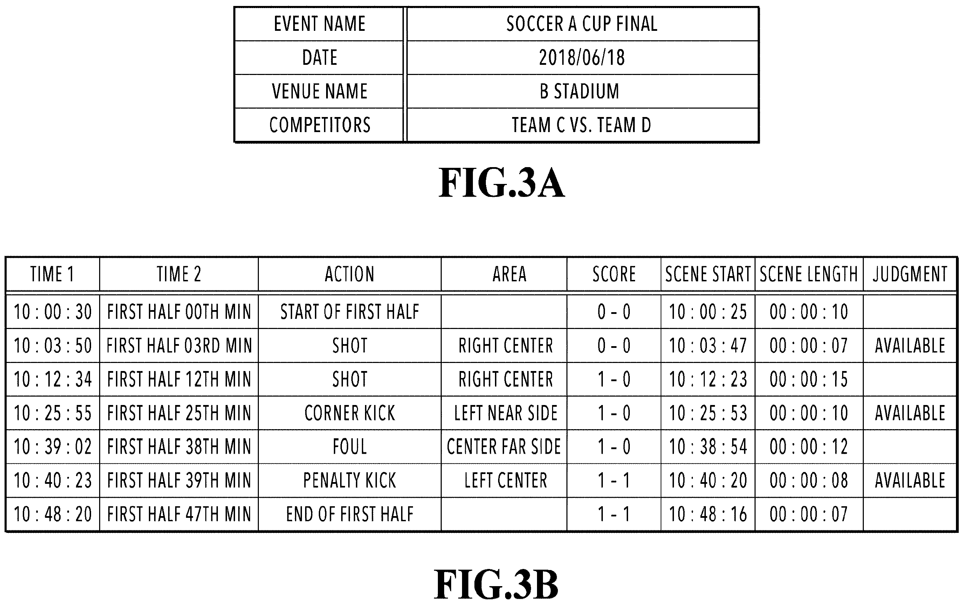

FIGS. 3A and 3B show an example of the event information in a case where the event is a soccer game. The basic event information contains at least information on the name of the event, the date and venue when and where the event was held, and the competitors as shown in FIG. 3A. The event log information contains at least the names of certain actions that occurred in the event and the times of occurrence of these actions (time 1). The event log information shown in FIG. 3B also contains relative time of occurrence of each action (time 2), such as "FIRST HALF, 03RD MIN", the area where the action occurred, such as "RIGHT CENTER", and information such as whether video judgment is available. In addition to these, the event log information may further contain score information and scene time information.

The reference model storing unit 3 stores three-dimensional shape models (hereinafter referred to as the reference models) of correction target objects among the objects contained in the multi-viewpoint image held in the multi-viewpoint image storing unit 1. The reference model storing unit 3 further stores reference model information containing various pieces of information on the reference models. Here, the reference model information contains at least information on the name and shape of each reference model.

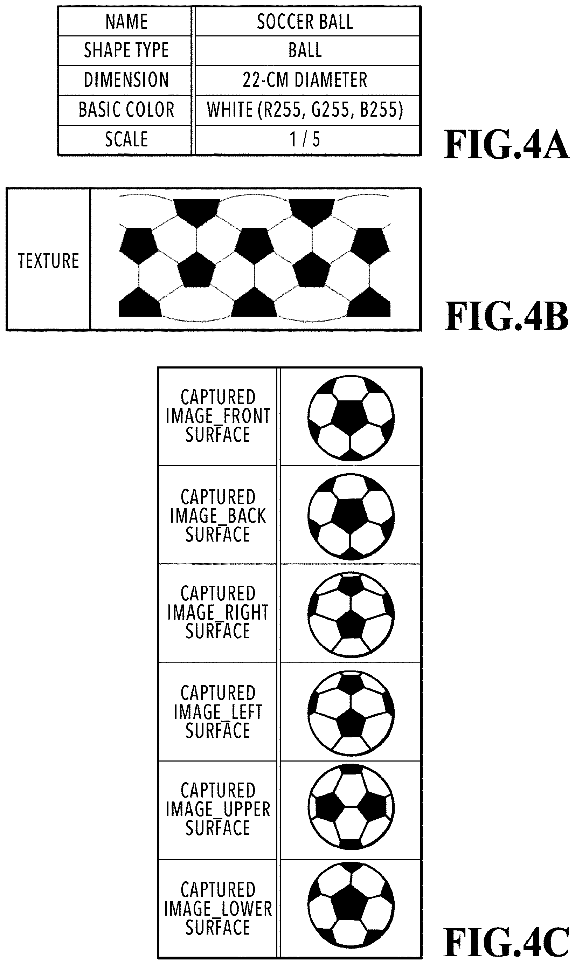

FIGS. 4A to 4C show an example of the reference model information in a case where the correction target object is a soccer ball. The name of the reference model is the same as the object, "SOCCER BALL". As shown in FIG. 4A, the shape information contained in the reference model information contains at least the shape type, such as "BALL", dimensional information, such as "22-CM DIAMETER", and scale information on the reference model. The reference model information may further contain basic color information, such as "WHITE" as shown in FIG. 4A, multi-viewpoint captured image data as shown in FIG. 4C, or texture data to be attached to the 3D model as shown in FIG. 4B.

Next, the 3D model generation-storing unit 401, the rendering unit 402, and the fitting unit 403 of the image processing apparatus 4 will be described.

The 3D model generation-storing unit 401 generates pieces of foreground image data obtained by extracting moving objects such as the players and the ball from the multi-viewpoint image obtained from the multi-viewpoint image storing unit 1, and generates three-dimensional shape models (shape models) from these pieces of foreground image data. The pieces of foreground image data are generated by image processing such as extraction of the differences from background image data captured in a state where the above moving objects were not present, such as before the start of the game. The shape models are generated by three-dimensional shape reconstruction processing such as volume intersection method (shape from silhouette method).

Also, the 3D model generation-storing unit 401 stores the pieces of foreground image data and shape models thus generated and shape model information used in the generation, and provides them to the rendering unit 402 and the fitting unit 403 in response to a request to obtain them. Here, the shape model information contains at least image capturing information on the multi-viewpoint image held in the multi-viewpoint image storing unit 1 and scale information on the shape models.

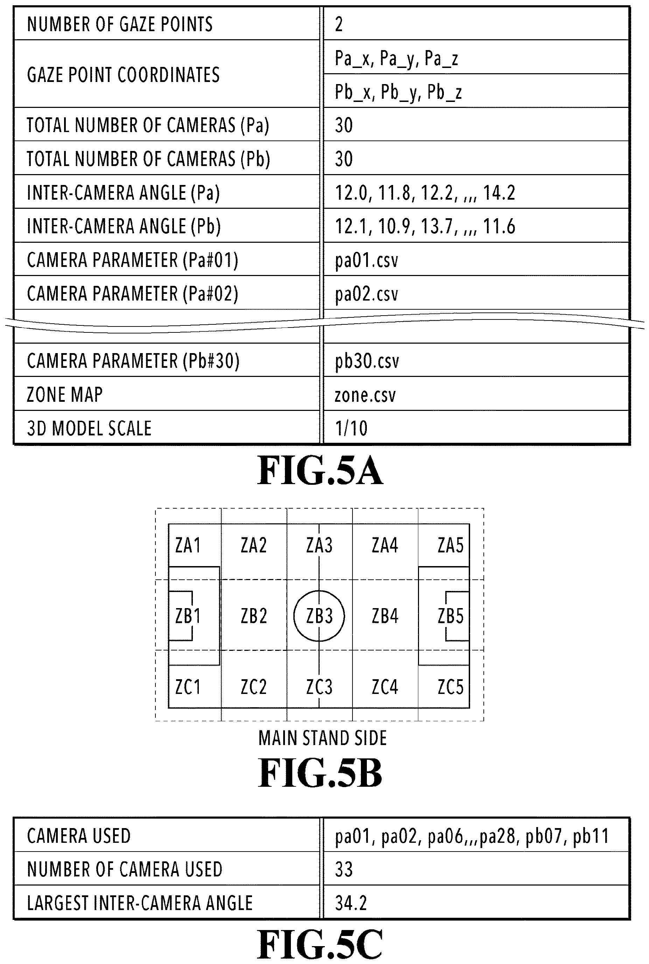

FIGS. 5A to 5C show an example of the image capturing information in a case where the image capturing location is a soccer field. The image capturing information contains at least parameters of each camera as shown in FIG. 5A, and may further contain the number of gaze points (points of direction), the coordinates of the gaze points, the number of cameras for each gaze point, the angle between each pair of neighboring cameras, and a zone map formed of partitioned image capturing ranges as shown in FIG. 5B. Here, the parameters for each camera include at least the position, orientation, and the focal length of the camera. For each time and each shape model, the 3D model generation-storing unit 401 may also store information such as a camera list and the number of cameras used to generate the shape model, and the largest inter-camera angle indicating the largest interval between the used camera as shown in FIG. 5C. Also, the 3D model generation-storing unit 401 receives and stores corrected shape models from the fitting unit 403.

The rendering unit 402 generates a virtual viewpoint image by using a method such as model-based rendering based on virtual camera parameters received from the virtual camera setting unit 502 of the user terminal 5 or the fitting unit 403. The rendering unit 402 then passes the generated virtual viewpoint image data to the user terminal 5. Here, a virtual camera is a virtually present camera different from the plurality of image capturing apparatuses actually installed around the image capturing region, and is a concept for conveniently explaining a virtual viewpoint. In sum, a virtual viewpoint image is an image virtually captured by the virtual camera. The virtual camera parameters are parameters designating at least the position and orientation of the virtual camera (virtual viewpoint information), and are associated with a frame number or timecode to identify which frame in the multi-viewpoint image the parameters belong to. Also, the rendering unit 402 has a corrected-data use flag which it refers to at the start of processing, and performs rendering using a shape model corrected by the fitting unit 403 in a case where this flag is on. Details of the rendering unit 402 will be described later.

The fitting unit 403 identifies which object at which time is to be a correction target from the event information and the reference model information, and obtains the shape model of the object identified as the correction target (hereinafter referred to as the target model) from the 3D model generation-storing unit 401. The fitting unit 403 then corrects the target model to match it with the corresponding reference model. Then, the fitting unit 403 passes the corrected target model to the 3D model generation-storing unit 401. Moreover, the fitting unit 403 obtains the piece of event log information associated with the corrected target model from the event information storing unit 2 and passes it to the scene selection unit 503. Details of the fitting unit 403 will be described later. Meanwhile, the correction target object is identified from the event information and the reference model information. However, for all scenes, the object of the reference model may be the correction target. In this case, it is possible to identify the correction target solely from the reference model information.

Next, the display unit 501, the virtual camera setting unit 502, and the scene selection unit 503 of the user terminal 5 will be described.

The display unit 501 displays a virtual viewpoint image based on the virtual viewpoint image data received from the image processing apparatus 4 through a network or the like (not shown).

The virtual camera setting unit 502 configures the virtual camera's settings based on user inputs, and passes the setting result as virtual camera parameters to the rendering unit 402. The user can control the position, orientation, and angle of view of the virtual camera by operating UIs such as sliders displayed on the display unit 501 of the user terminal 5 or tilting the user terminal 5 in a case where it is equipped with a gyro sensor.

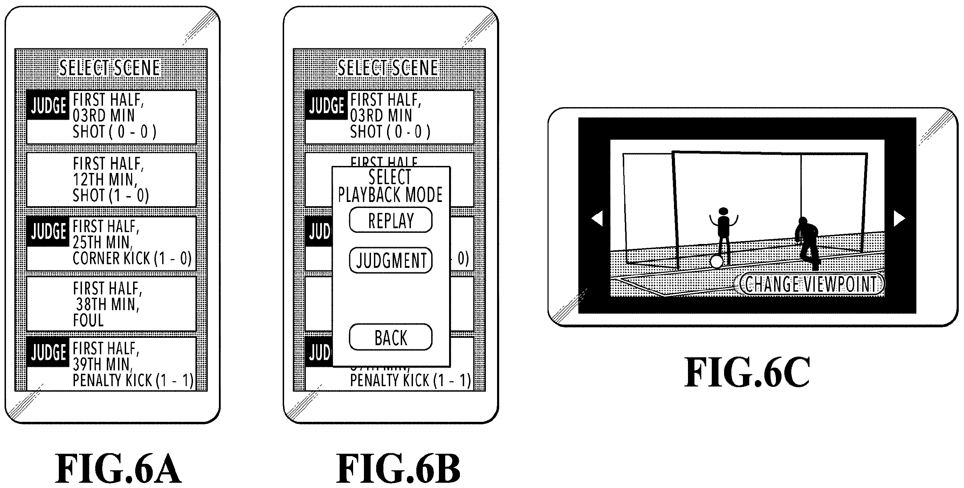

The scene selection unit 503 generates a scene selection screen from the event log information received from the fitting unit 403 and displays it on the display unit 501. FIG. 6A shows an example of the scene selection screen generated based on the event log information shown in FIG. 3B. In the example shown in FIG. 6A, the scene selection unit 503 displays, among the pieces of information contained in the event log information, the names and the relative times of occurrence of actions, the score information for the actions that may change the score, and a video judgment icon for the actions for which video judgment is available, on the scene selection screen. The scene selection unit 503 passes scene identifying information to the fitting unit 403 in a case where the scene selected by the user contains a target model, which is a correction target shape model. Here, the scene identifying information is information for identifying an action contained in the event log information and is specifically an action name and an action occurrence time.

In a case where the user selects an action for which vide judgment is available on the scene selection screen, the scene selection unit 503 generates a playback mode selection screen for the user to select whether to correct the corresponding target model. FIG. 6B shows an example of the playback mode selection screen in a case where the user has selected "FIRST HALF, 03RD MIN, SHOT (0 - 0)" in the scene selection screen shown in FIG. 6A. In the example shown in FIG. 6B, the scene selection unit 503 presents a "JUDGMENT" mode which involves correcting the target model and a "REPLAY" mode which does not involve correcting the target model on the playback mode selection screen. In a case where the user selects the "JUDGMENT" mode, the scene selection unit 503 passes the scene identifying information to the fitting unit 403. In the example shown in FIG. 6B, the scene identifying information is the action name "SHOT" and the action occurrence time "10:03:50".

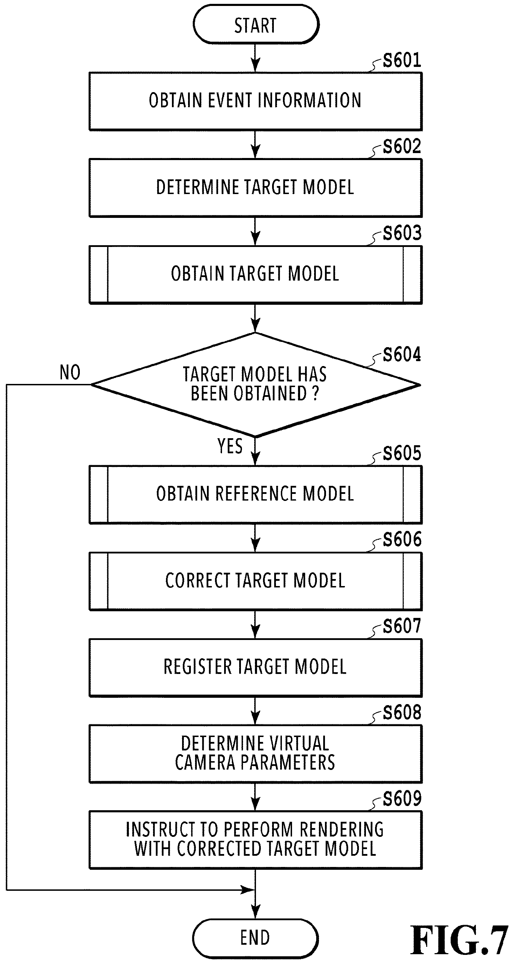

FIG. 7 is a flowchart of processing of fitting by the fitting unit 403.

In S601, upon receipt of scene identifying information from the scene selection unit 503, the fitting unit 403 starts the fitting processing. Based on the scene identifying information, the fitting unit 403 obtains the piece of event log information of the corresponding action from the event information storing unit 2. In a case where the event log information has the contents shown in FIG. 3B and the scene identifying information is the action name "SHOT" and the action occurrence time "10:03:50", the piece of event log information obtained by the fitting unit 403 is the piece of event log information of the second action.

In S602, the fitting unit 403 determines the fitting target object based on the obtained piece of event log information. The action in each piece of event log information may have an individual target object, or each action name may be associated with a target object. Assume, for example, that the fitting unit 403 obtains the second action in the event log information shown in FIG. 3B in S601 and that "SOCCER BALL" is associated as the target object with the action name contained in the piece of event log information. In this case, the fitting unit 403 determines "SOCCER BALL" as the correction target object.

In S603, the fitting unit 403 obtains the target model being the shape model of the determined correction target object from the 3D model generation-storing unit 401. Details of the target model obtaining processing will be described later.

In S604, the fitting unit 403 determines whether the target model has been obtained. If the target model has not been obtained (no in S604), the fitting unit 403 terminates the fitting processing. If the target model has been obtained (yes in S604), the fitting unit 403 proceeds to S605.

In S605, the fitting unit 403 obtains the reference model of the target object from the reference model storing unit 3.

In S606, the fitting unit 403 corrects the target model so as to match its shape with the shape of the reference model. Details of the reference model obtaining processing and the target model correction processing will be described later.

Then, the fitting unit 403 registers the corrected target model in the 3D model generation-storing unit 401. The corrected target model may be registered as a replacement for the target model before the correction held in the 3D model generation-storing unit 401, or additionally registered such that the target model before the correction and the target model after the correction are distinguishable. In the case of additionally registering the corrected target model, for example, the three-dimensional shape model is provided with metadata representing a data type indicating whether it is corrected data. Also, the rendering unit 402 is provided with the corrected-data use flag for determining whether to use the corrected target model, which is corrected data, in rendering processing. Then, by turning on or off the corrected-data use flag of the rendering unit 402, it is possible to control whether to use the target model before the correction or to use the target model after the correction in the rendering.

In S608, the fitting unit 403 determines the virtual camera parameters that specify the virtual camera for generating a virtual viewpoint image of the registered corrected target model. The multi-viewpoint synchronous image capturing range may be partitioned into several zones, and the virtual camera parameters may be determined for each zone or for each combination of a zone and an action name. Alternatively, the virtual camera parameters may be determined according to the state of correction of the target model. Here, an example of designating the position and orientation of the virtual camera by using a zone map will be discussed. Assume that there is a target object "SOCCER BALL" in the zone "ZB5" in the zone map shown in FIG. 5B. In this case, the position of the virtual camera can be determined to be a height of 2 m from the center of the zone "ZB4" and the gaze point of the virtual camera can be determined to be a height of 0 m from the center of the zone "ZB5" or the center of the target object, for example. Alternatively, the virtual camera may be placed at the circumference of a circle at a distance of 3 m from the target object at a height of 1 m. In this manner, the angle can be such that the amount of correction of the target model is minimum in a case where the virtual camera faces straight toward the target model.

Note that the configuration may be such that the position, orientation, and angle of view of the virtual camera determined in S608 by the fitting unit 403 can be changed with a "CHANGE VIEWPOINT" button or the like in a screen displayed on the display unit 501 of the user terminal 5 as shown in FIG. 6C.

In S609, the fitting unit 403 turns on the corrected-data use flag of the rendering unit 402 to instruct the rendering unit 402 to generate a virtual viewpoint image from the determined virtual viewpoint by using the registered corrected target model. The fitting unit 403 then terminates the fitting processing.

Note that in a case of performing the fitting processing for a plurality of continuous times, S602, S605, and S608 in the second and subsequent operations can be skipped.

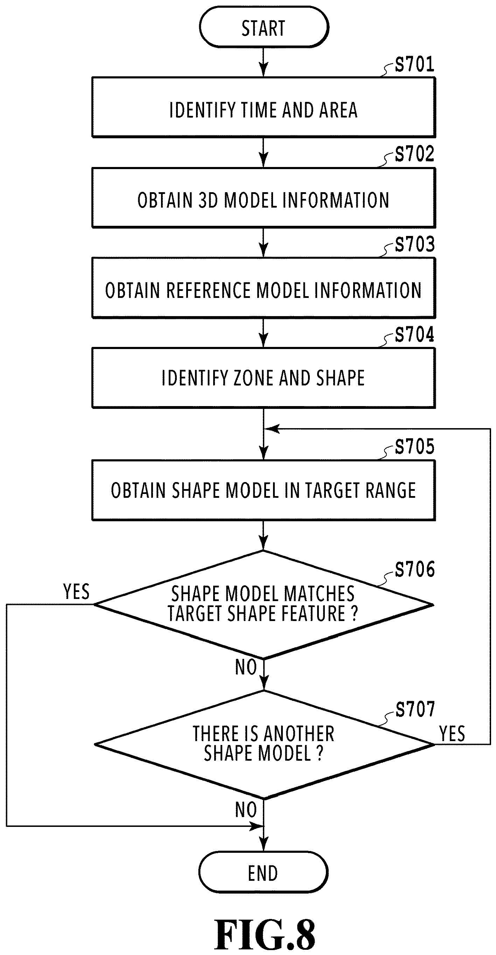

FIG. 8 is a flowchart of the processing of obtaining the target model by the fitting unit 403.

In S701, upon determination of the correction target object, the fitting unit 403 starts the target model obtaining processing. From the piece of event log information obtained in S601 in FIG. 7, the fitting unit 403 identifies the time and area from which to obtain the object. In a case where the piece of event log information represents the second action in the example shown in FIG. 3B, the fitting unit 403 identifies that the target object "SOCCER BALL" obtained by the fitting unit 403 is present in the area "RIGHT CENTER" as seen from the main stand side at the time "10:03:50".

In S702, the fitting unit 403 obtains the 3D model information from the 3D model generation-storing unit 401.

In S703, the fitting unit 403 obtains the reference model information from the reference model storing unit 3.

In S704, from the obtained 3D model information and reference model information, the fitting unit 403 identifies where the shape model to be the target model is present in the multi-viewpoint synchronous image capturing range and what shape the shape model has.

Here, a method of identifying the target model using a zone map indicating an image capturing range contained in the 3D model information will be described using the zone map shown in FIG. 5B. The area "RIGHT CENTER" identified in S701 can be identified as the zone "ZB5". Assume also that the 3D model information is the example shown in FIG. 5A and the reference model information is the example shown in FIG. 4A. In this case, from the 3D model scale "1/10" and the shape "22-CM DIAMETER BALL", the shape feature of the target object "SOCCER BALL" (hereinafter referred to as the target shape feature) can be identified as a "22-MM DIAMETER BALL".

In S705, the fitting unit 403 obtains a shape model present in the target range (e.g., the zone "ZB5") at the target time (e.g., "10:03:50") among the shape models held in the 3D model generation-storing unit 401.

In S706, the fitting unit 403 determines whether the obtained shape model matches the target shape feature (e.g., "22-MM DIAMETER BALL"). If the shape model matches the target shape feature (yes in S706), the fitting unit 403 obtains the shape model as the target model. The fitting unit 403 then terminates the target model obtaining processing. Whether the shape model matches the target shape feature may be determined based on whether or not the difference in length or volume between the shape model and the target shape feature is a predetermined value or smaller, or whether the difference between the shape model and the reference model obtained by executing the later-described reference model obtaining processing (S605 in FIG. 7) in advance is a predetermined value or smaller. Meanwhile, there are also cases where a plurality of objects are joined to form a single shape model due to a player and the ball contacting each other or the like. For this reason, whether a part of the shape model matches the target shape feature may be determined, instead of the whole shape model, and the matched part may be cut out as the target model. If the obtained shape model does not match the target shape feature in S706 (no in S706), the fitting unit 403 proceeds to S707.

In S707, the fitting unit 403 determines whether another shape model that has not been obtained in S705 among the shape models present in the target range at the target time exists. If there is another shape model that has not been obtained (yes in S707), the fitting unit 403 obtains said another shape model. On the other hand, if there is not any shape model that has not been obtained (no in S707), the fitting unit 403 terminates the target model obtaining processing.

Note that in a case of performing the fitting processing for a plurality of continuous times, the obtaining of the target range in S701, S702, S703, and S704 in the second and subsequent operations can be skipped. Also, in a case where the 3D model generation-storing unit 401 stores the shape models such that the associations between the shape models and their respective objects have been identified, the target model can be obtained only by identifying the target time in S701.

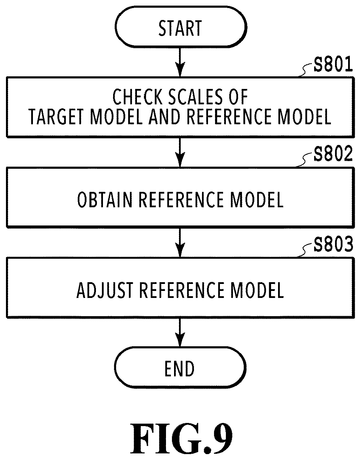

FIG. 9 is a flowchart of the processing of obtaining the reference model by the fitting unit 403.

Upon obtaining the target model, the fitting unit 403 starts the reference model obtaining processing.

Upon start of the reference model obtaining processing, firstly in S801, the fitting unit 403 identifies the scale of each of the target model and its reference model from the 3D model information and the reference model information obtained in S702 and S703 in FIG. 8. The scale of the target model is "1/10" in the case where the 3D model information is the example shown in FIG. 5A, and the scale of the reference model is "1/5" in the case where the reference model information is the example shown in FIG. 4A.

In S802, the fitting unit 403 obtains the reference model of the target object from the reference model storing unit 3.

In S803, the fitting unit 403 adjusts the obtained reference model such that its scale matches the scale of the target model, and then terminates the reference model obtaining processing. For example, in the case where the target model has a scale "1/10" while the reference model has a scale "1/5", the reference model is adjusted by reducing the size of the reference model such that its scale becomes "1/10". Note that, instead of adjusting the reference model, the target model may be adjusted to match its scale with the reference model, and the scale of the target model may be set back to the original scale in the target model correction to be described next.

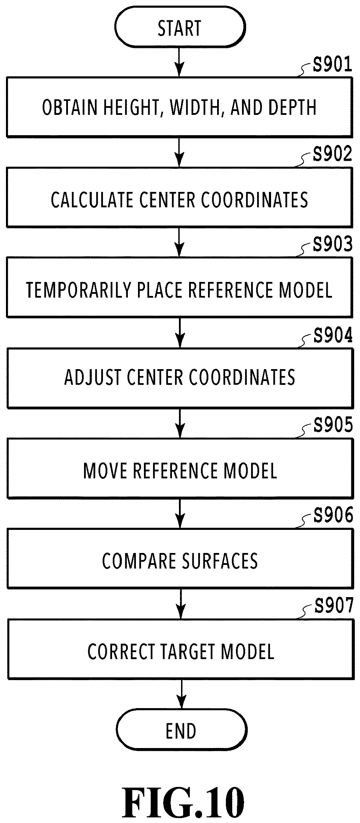

FIG. 10 is a flowchart of the processing of correcting the target model by the fitting unit 403.

Upon obtaining the reference model, the fitting unit 403 starts the target model correction processing.

Upon start of the target model correction processing, firstly in S901, the fitting unit 403 obtains the height, width, and depth of the target model obtained in S603 in FIG. 7. In the case where the target object is a "SOCCER BALL" with the shape "22-MM DIAMETER BALL", at least one of the height, width, and depth of the obtained target model is likely to be around 22 mm even if the volume of the target model is about 1/3 due to a partial loss or distortion.

In S902, the fitting unit 403 calculates the center coordinates based on the obtained height, width, and depth.

In S903, the fitting unit 403 temporarily places the reference model such that the calculated center coordinates of the target model and the center coordinates of the reference model match with each other. Note that in a case of performing the fitting processing for a plurality of continuous times, S901 and S902 in the second and subsequent operations may be skipped, and the position to which the reference model has been moved in S903 for the immediately preceding time may be used as the position to temporarily place the reference model in S903.

In S904, the fitting unit 403 moves the temporarily placed reference model in the up-down, left-right, and front-rear directions to identify the position at which the overlap region between the reference model and the target model is maximum to thereby adjust the coordinates at which to dispose the reference model.

In S905, the fitting unit 403 moves the reference model such that the center coordinates of the reference model match with the adjusted coordinates at which to dispose it. Note that in a case where the target model has a lowly symmetrical shape, such as the shape of a rugby ball, and needs an axial (directional) adjustment as well, the fitting unit 403 rotates the temporarily placed reference model horizontally and/or vertically to adjust the arrangement of the reference model including its orientation.

In S906, the fitting unit 403 compares the target model surfaces and the reference model surfaces with each other. The surfaces of the target model and the reference model are compared by obtaining the difference of each target model surface from the corresponding reference model surface in terms of a predetermined unit such as voxel. The result of the comparison between the target model and the reference model is classified into the following three results. The first is a case where the target model is not present on the reference model surface, that is, the target model surface is present inside the reference model surface, and the comparison result indicates that there is a difference. The second is a case where the target model is present on the reference model surface but the target model surface is not, that is, the target model surface is present outside the reference model surface, and the comparison result indicates that there is a difference. The third is a case where the reference model surface and the target model surface match each other, and the comparison result indicates that there is no difference. Note that each surface region may be compared with, for example, a surface region having the same two arguments in a polar coordinate system centered at any coordinates in the overlapping region of the reference model and the target model.

In S907, for each paired target model surface and reference model surface with a comparison result indicating that there is a difference, the fitting unit 403 changes the target model surface to thereby correct the target model. The fitting unit 403 then terminates the target model correction processing. In the case where the target model surface corresponding is not present on the corresponding reference model surface, that is, the target model surface is located inside the reference model surface, the fitting unit 403 may correct the target model by adding the reference model surface to the target model. On the other hand, in the case where the target model surface is present but not on the reference model surface, that is, the target model surface is located outside the reference model surface, the fitting unit 403 may correct the target model by replacing the target model surface with the reference model surface. Note that the target model may be corrected by skipping the surface comparison in S906 and inserting the entire surface of the temporarily placed reference model as the target model surfaces.

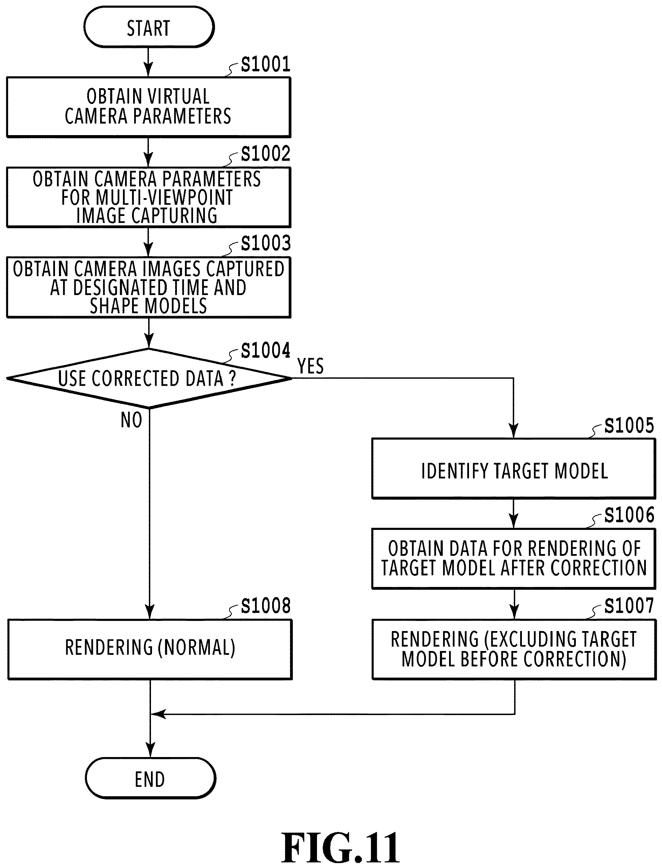

FIG. 11 is a flowchart of the processing of rendering by the rendering unit 402.

When the virtual camera parameters are transmitted from the fitting unit 403 or the virtual camera setting unit 502, the rendering unit 402 starts the rendering processing and, in S1001, receives the virtual camera parameters.

In S1002, the rendering unit 402 obtains the camera parameters contained in the 3D model information from the 3D model generation-storing unit 401. Note that S1002 can be skipped in a case where the camera parameters have already been obtained since the camera parameters will remain unchanged as long as the camera positions and the gaze point positions are not changed during the multi-viewpoint synchronous image capturing.

In S1003, the rendering unit 402 obtains the captured images obtained by the multi-viewpoint synchronous image capturing at the time designated by the virtual camera parameters and the corresponding shape models from the 3D model generation-storing unit 401. In a case where there is a target model corrected by the fitting unit 403, the corrected target model has been added, so that the number of shape models obtained increases by one. Note that instead of obtaining the captured images, the rendering unit 402 may obtain each piece of background image data and each piece of foreground image data.

In S1004, based on the corrected-data use flag, the rendering unit 402 determines whether to use corrected data.

If the corrected-data use flag is on (yes in S1004), the rendering unit 402 identifies the target model after the correction based on the data type of the target model.

In S1006, the rendering unit 402 obtains rendering information containing data for rendering the scene containing the target model after the correction, specifically, data of the shape models including the target model after the correction and the background image.

In S1007, the rendering unit 402 performs rendering on all shape models contained in the same scene excluding the target model before the correction and including the target model after the correction by using the captured images so as to obtain a virtual viewpoint image of them from the virtual camera. The rendering information obtained in S1006 may be the specific color data contained in the reference model information, such as the basic color "WHITE" shown in FIG. 4A, the multi-viewpoint captured image data shown in FIG. 4C, or the three-dimensional shape model texture data shown in FIG. 4B. As for the orientation of the target model in the case of using the multi-viewpoint captured image data or the three-dimensional shape model texture data, the front side of the target model may be assumed to be facing straight toward the virtual camera, or the orientation may be calculated from the target object's pattern or the like in the captured images. Also, the rendering information obtained in S1006 may be converted so as to bring the brightness, tint, and vividness of the target model close to those in the captured images, and then rendering may be performed in S1007. The surfaces that have not been corrected by the fitting unit 403 may be rendered in S1007 by using the captured image data irrespective of the rendering information obtained in S1006.

If the corrected-data use flag is off (no in S1004), then in S1008, the rendering unit 402 renders the shape models contained in the same scene excluding the target model after the correction and including the target model before the correction. In doing so, the rendering unit 402 obtains data of the shape models including the target model before the correction and the background image and performs rendering with them to obtain a virtual viewpoint image from the virtual camera.

By correcting the shape of an object of interest in the above-described manner, it is possible to generate a virtual viewpoint image without the object of interest being distorted in shape or losing a part of its contour.

### (Embodiment 2)

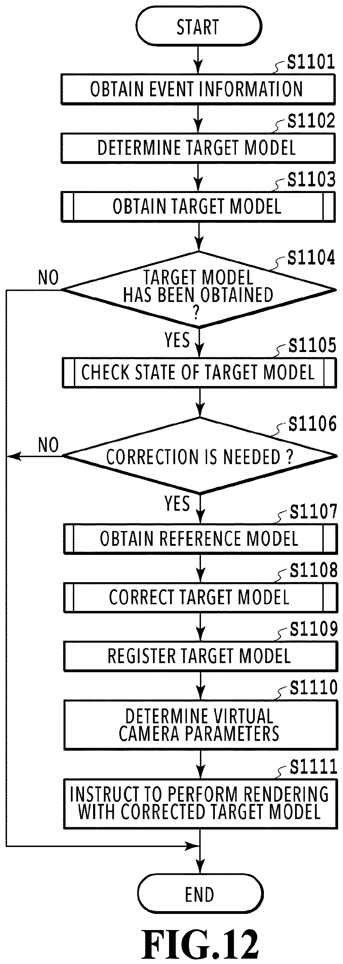

FIG. 12 is a flowchart of processing of fitting in an image processing system according to embodiment 2 of the technique of the present disclosure. Note that the configurations are the same as those in embodiment 1 except for the configuration for the fitting processing, and will not therefore be described in detail. S1101 to S1104 and S1107 to S1111 are similar processes to S601 to S609 in FIG. 7, and will not therefore be described in detail.

Upon receipt of scene identifying information from the scene selection unit 503, the fitting unit 403 starts the fitting processing.

Upon start of the fitting processing, in S1101, the fitting unit 403 obtains the piece of event log information of the corresponding action.

In S1102, the fitting unit 403 determines the fitting target object.

In S1103, the fitting unit 403 obtains the target model from the 3D model generation-storing unit 401.

If the target model has not been obtained (no in S1104), the fitting unit 403 terminates the fitting processing. If the target model has been obtained (yes in S1104), the fitting unit 403 proceeds to S1105.

In S1105, the fitting unit 403 checks the state of the target model. Details of the target model state checking processing by the fitting unit 403 will be described later.

In S1106, the fitting unit 403 determines whether the target model needs correction.

If determining that the target model does not need correction and, for example, a correction flag indicating that correction is needed is off (no in S1106), the fitting unit 403 terminates the fitting processing. On the other hand, if determining the target model needs correction and, for example, the above correction flag is on (yes in S1106), the fitting unit 403 proceeds to S1107.

In S1107, the fitting unit 403 obtains the reference model of the target object.

In S1108, the fitting unit 403 corrects the target model.

In S1109, the fitting unit 403 registers the corrected target model in the 3D model generation-storing unit 401.

In S1110, the fitting unit 403 determines the virtual camera parameters.

In S1111, the fitting unit 403 turns on the corrected-data use flag of the rendering unit 402 to instruct the rendering unit 402 to generate a virtual viewpoint image by using the registered corrected target model. The fitting unit 403 then terminates the fitting processing.

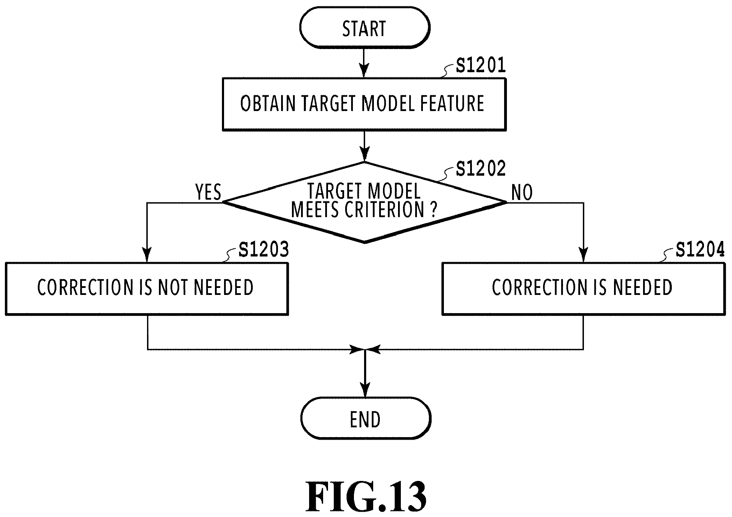

FIG. 13 is a flowchart of the processing of checking the target model by the fitting unit 403.

Upon obtaining the target model in S1103 in FIG. 12, the fitting unit 403 starts the target model state checking processing.

Upon start of the target model state checking processing, in S1201, the fitting unit 403 obtains a predetermined target model feature related to the obtained target model.

In S1202, the fitting unit 403 determines whether the obtained target model feature meets a predetermined criterion.

If the target model feature meets the criterion (yes in S1202), the fitting unit 403, for example, turns off the correction flag indicating that correction is needed for the data of the target model in S1203.

If the target model feature does not meet the criterion (no in S1202), the fitting unit 403, for example, gives the above correction flag, indicating that correction is needed, to the data of the target model in S1204.

In a case where the target model feature is the number of captured images used to generate the target model, the fitting unit 403 obtains the number of captured images used from the 3D model generation-storing unit 401 in S1201 and determines whether the number of captured images is above a predetermined number in S1202.

In a case where the target model feature is the largest angle between the cameras that captured the captured images used to generate the target model, the fitting unit 403 obtains largest inter-camera angle information from the 3D model generation-storing unit 401 in S1201. Then, the fitting unit 403 determines whether or not the largest inter-camera angle is a predetermined value or smaller in S1202.

In a case where the target model feature is a value calculated from the dimensions (height, width, and depth), volume, or the like of the target model, the fitting unit 403 identifies the dimensions of the target model in S1201. The fitting unit 403 then determines whether or not the difference between the dimensions of the target model and the dimensions of the reference model derived based on the reference model information is a predetermined value or smaller in S1202.

In a case where the target model feature is the ratio of partial loss of the object in the captured images used to generate the target model, the fitting unit 403 identifies the ratio of partial loss of the object in each of the captured images in S1201. Then in S1202, the fitting unit 403 determines whether the number of captured images with a ratio of partial loss smaller than or equal to a predetermined value is above a predetermined number, whether or not the sum or average of the ratios of partial loss of the plurality of captured images is a predetermined value or smaller, or the like. Note that the ratio of partial loss of the object in each captured image may be, for example, the ratio of the area of the object in the captured image to the area of the object in a virtual viewpoint image from the same viewpoint as the captured image calculated from the reference model information.

As described above, by checking whether the object of interest is in a state where correction is needed and then correcting the shape of the object of interest, it is possible to generate a virtual viewpoint image without the object of interest being distorted in shape or losing a part of its contour.

### (Embodiment 3)

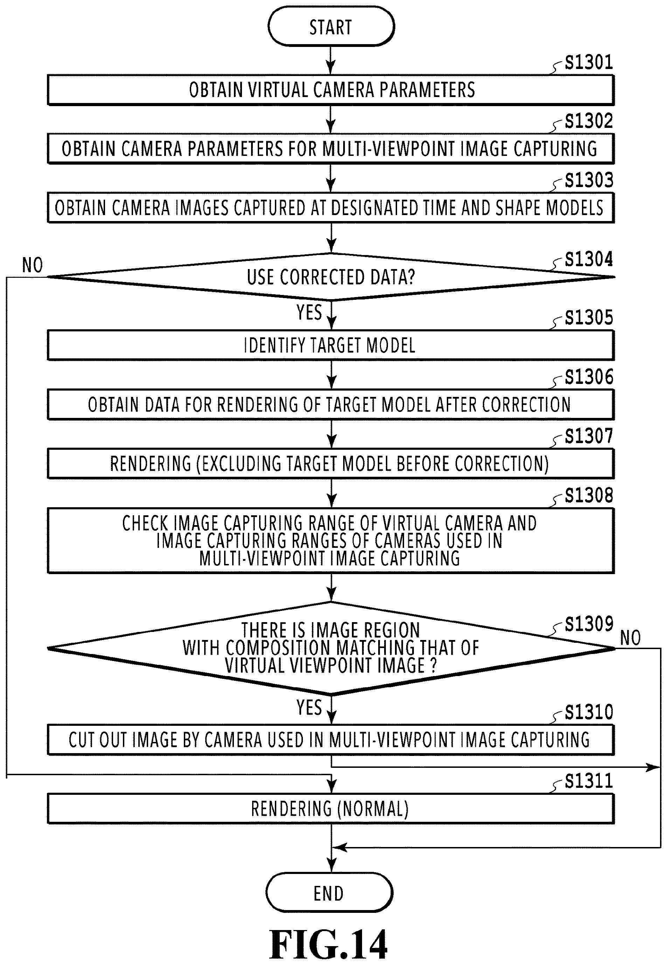

FIG. 14 is a flowchart of processing of rendering in an image processing system according to embodiment 3 of the technique of the present disclosure. Note that the configurations are the same as those in embodiment 1 except for the configuration for the rendering processing, and will not therefore be described in detail. Also, S1301 to S1307 and S1311 are similar processes to S1001 to S1008 in FIG. 11, and will not therefore be described in detail.

When the virtual camera parameters are transmitted from the fitting unit 403 or the virtual camera setting unit 502, the rendering unit 402 starts the rendering processing and, in S1301, receives the virtual camera parameters.

In S1302, the rendering unit 402 obtains the camera parameters.

In S1303, the rendering unit 402 obtains the captured images at the designated time and the corresponding three-dimensional shape models.

In S1304, based on the corrected-data use flag, the rendering unit 402 determines whether to use corrected data.

If the corrected-data use flag is on (yes in S1304), the rendering unit 402 identifies the target model before the correction and the target model after the correction in S1305.

In S1306, the rendering unit 402 obtains data for rendering of the target model after the correction.

In S1307, the rendering unit 402 performs rendering on the three-dimensional shape models excluding the target model before the correction to obtain a virtual viewpoint image of them from the virtual camera.

In S1308, the rendering unit 402 obtains the image capturing range of the virtual camera and the image capturing ranges of the cameras used in the multi-viewpoint synchronous image capturing.

In S1309, the rendering unit 402 determines whether there is a captured image containing an image region with a composition matching that of the virtual viewpoint image.

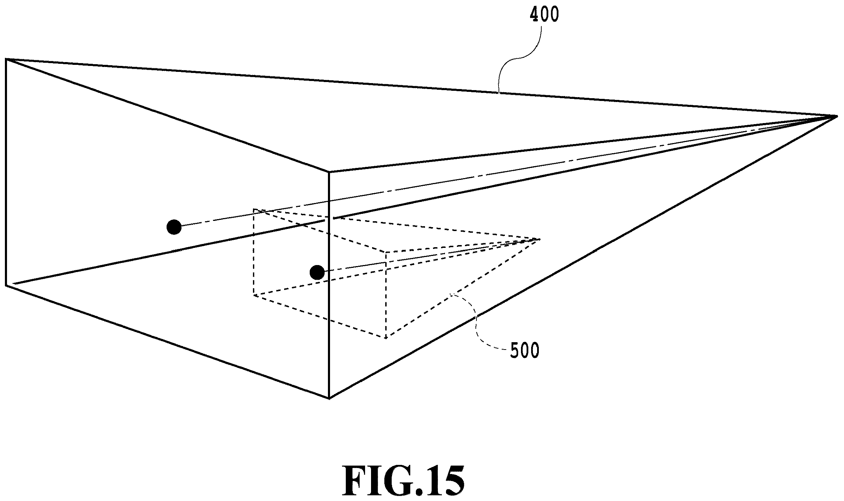

If there is a captured image containing an image region with a composition matching that of the virtual viewpoint image (yes in S1309), the rendering unit 402 cuts out a virtual viewpoint image from the captured image in S1310. Note that, as shown in FIG. 15, in a case where the virtual camera's image capturing range 500 is inside a camera's image capturing range 400, the captured image contains an image region with a composition matching that of the virtual viewpoint image if the optical axis of the virtual camera shown by a long dashed short dashed line is parallel to the optical axis of the camera shown by the other long dashed short dashed line.

If there is no captured image containing an image region with a composition matching that of the virtual viewpoint image (no in S1309), the rendering unit 402 terminates the rendering processing.

If the corrected-data use flag is off (no in S1304), the rendering unit 402 performs rendering on all shape models in S1311 such that they appear as seen from the virtual viewpoint.

The captured image cut out in S1310 and the virtual viewpoint image obtained by the rendering in S1307 may be displayed side by side on the display unit 501 or the display of these images on the display unit 501 may be toggled, for example, to enable one to check that the correction has been done properly.

As described above, by using a virtual viewpoint image along with a captured image having the same composition, it is possible to check that the virtual viewpoint image has been generated while preventing the object of interest from being distorted in shape or losing a part of its contour.

### (Other Embodiments)

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

According to the technique of the present disclosure, it is possible to improve the accuracy of an object shape.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image processing apparatus (4) comprising:
an obtaining unit (401) configured to obtain a three-dimensional shape model of object generated based on a plurality of captured images obtained by a plurality of image capturing apparatuses for generating a virtual viewpoint image; and
a correction unit (402, 403) configured to correct the obtained three-dimensional shape model based on a reference model.

2. The image processing apparatus according to claim 1, wherein the obtaining unit obtains, as a target model to be corrected by the correction unit, the three-dimensional shape model of an object identified based on first information for identifying the reference model from among three-dimensional shape models generated based on the plurality of captured images.

3. The image processing apparatus according to claim 2, wherein the obtaining unit obtains the target model from among the three-dimensional shape models generated based on the plurality of captured images containing the identified object, based on second information for identifying the captured images containing the identified object.

4. The image processing apparatus according to claim 2 or 3, wherein the correction unit
detects a position of the target model, and
in a case where a surface of the reference model and a surface of the target model do not match each other in a state where the detected position of the target model and a position of the reference model are set to match with each other, corrects the target model such that the surface of the reference model appears as the surface of the target model.

5. The image processing apparatus according to any one of claims 2 to 4, wherein the correction unit
obtains a shape feature of the three-dimensional shape model before the correction, and
corrects the three-dimensional shape model in a case where the shape feature does not meet a predetermined criterion.

6. The image processing apparatus according to claim 5, wherein
the shape feature is the number of the plurality of captured images used to generate the target model, and
the criterion is a state where the number of the captured images used to generate the target model is a predetermined number or more.

7. The image processing apparatus according to claim 5, wherein
the shape feature is a largest angle between optical axes of the image capturing apparatuses that obtained the plurality of captured images used to generate the target model, and
the criterion is a state where the largest angle is a predetermined value or smaller.

8. The image processing apparatus according to claim 5, wherein the criterion is a state where a difference between the shape feature of the three-dimensional shape model and a shape feature of the reference model is a predetermined value or smaller.

9. The image processing apparatus according to claim 5, wherein
the shape feature is a sum or an average of ratios of partial loss of the identified object in the plurality of captured images used to generate the target model, and
the criterion is a state where the sum or the average of the ratios of partial loss of the identified object is a predetermined value or smaller.

10. The image processing apparatus according to any one of claims 1 to 9, further comprising an image generation unit configured to generate the virtual viewpoint image based on the corrected three-dimensional shape model.

11. The image processing apparatus according to claim 10, wherein the image generation unit
obtains virtual viewpoint information indicating a position and a direction of a virtual viewpoint,
obtains third information containing at least color information on the reference model, and
generates the virtual viewpoint image based on the virtual viewpoint information, the corrected three-dimensional shape model, and the third information.

12. The image processing apparatus according to any one of claims 1 to 11, wherein in a case where any of the captured images includes an image region with a composition matching a composition of the virtual viewpoint image, the image generation unit cuts out the image region from the captured image.

13. An image processing system comprising:
the image processing apparatus (4) according to any one of claims 1 to 12;
an image storing unit (1) configured to store a plurality of captured images obtained by the plurality of image capturing apparatus; and
a selection unit (5) configured to select a virtual viewpoint image to be obtained by the correction by the correction unit.

14. An image processing method comprising:
obtaining a three-dimensional shape model of each of objects generated based on a plurality of captured images obtained by a plurality of image capturing apparatuses for generating a virtual viewpoint image; and
correcting the obtained three-dimensional shape model based on a reference model.

15. A computer program causing a computer to execute an image processing method according to claim 14.
